# EUROPÄISCHE PATENTANMELDUNG

(11) **EP 0 547 381 A1**
(43) Veröffentlichungstag der Anmeldung: **23.06.1993**
(21) Anmeldenummer: 92119518.6
(22) Anmeldetag: 14.11.1992
(51) Int. Cl.: F16K 5/20, F16K 39/06

(54) **Kugelhahn**

(30) Priorität: 14.12.1991 DE 4141287
(71) Anmelder: ECKER MASCHINENBAU GMBH & CO. KG, D-66538 Neunkirchen (DE)
(72) Erfinder: Mateja, Ernst, W-6680 Neunkirchen (DE); Alles, Roman, W-6645 Beckingen (DE); Ecker, Felix, W-6683 Spiesen-Elversberg (DE)
(74) Vertreter: Bernhardt, Winfrid, Dr.-Ing.

(57) **Zusammenfassung**

Ein Kugelhahn für Flüssigkeiten, insbesondere für die Hydraulik, weist in einem Gehäuse (1,24) zwischen zwei Dichtringen (27;28) ein Küken (4) auf, das mittels einer an seiner einen Seite angeordneten, mit einem Hebel versehenen, zu der Achse der Dichtringe (27;28) senkrechten Welle (6) verdrehbar ist und auf dieser sowie einer auf der anderen Seite des Kükens (4) angeordneten, mit ihr fluchtenden Achse (5) unter Abdichtung (15,16) gegenüber dem Gehäuse (1) gelagert ist. Die Dichtringe (27;28) sind als Kolben in einem zylindrischen Gehäuseteil (24) angeordnet, so daß sie durch den Flüssigkeitsdruck an das Küken (4) angepreßt werden.

Um die beim Öffnen zu überwindende Reibungshaftung des Kükens an den Dichtringen im Falle von Gegendruck zu vermindern, hat der außerhalb des Kükens (4) zwischen den beiden Dichtringen (27;28) liegende Gehäuseraum (36) mit der Druckseite und/oder der Verbraucherseite eine durch ein von außen zu betätigendes Ventil führende Leitungsverbindung oder es ist zwischen den beiden Dichtringen (27;28) ein Abstandhalter (46) solcher Länge angeordnet, daß er bei an dem Küken (4) anliegendem druckseitigen Dichtring (27) den verbraucherseitigen Dichtring (28) von dem Küken (4) abgehoben hält und umgekehrt.

## Beschreibung

Die Erfindung geht aus von einem Kugelhahn für Flüssigkeiten, insbesondere für die Hydraulik, mit in einem Gehäuse zwischen zwei Dichtringen angeordnetem Küken, das mittels einer an seiner einen Seite angeordneten, mit einem Hebel versehenen, zu der Achse der Dichtringe senkrechten Welle verdrehbar ist und auf dieser sowie einer auf der anderen Seite des Kükens angeordneten, mit ihr fluchtenden Achse unter Abdichtung gegenüber dem Gehäuse gelagert ist, wobei die Dichtringe derart angeordnet sind, daß sie durch den Flüssigkeitsdruck an das Küken angepreßt werden, insbesondere als Kolben in einem zylindrischen Gehäuseteil, vorzugsweise diesem gegenüber durch einen schmaleren, elastischeren Dichtring abgedichtet, angeordnet sind.

Die Dichtringe normaler Kugelhähne bilden einen Sitz für das einen Durchgang und sonst weitgehend eine Kugeloberfläche aufweisende Küken. In der Schließstellung wird das Küken durch den Flüssigkeitsdruck an den der Druckseite abgewandten, verbraucherseitigen Dichtring gepreßt. Dauert diese Stellung länger an, entsteht eine zunehmende Reibungshaftung bis hin zur Verklebung, so daß der Öffnungsvorgang zunächst ein Losreißen aus der Haftung bedingt. Das verlangt erheblichen Kraftaufwand und führt zu Abnutzung und Beschädigung des Dichtringes.

Die eingangs genannte, u.a. aus der DE-OS 37 10 858 bekannte Lagerung des Kükens auf der Welle und der Achse vermindert die Reibungshaftung und Verklebungsgefahr des Kükens an dem Dichtring. Die Anordnung des Kükens zwischen den beiden Dichtringen ist zwar die gleiche wie vorher. Sie ist aber nicht mehr die (alleinige) Lagerung. Damit ändern sich die Verhältnisse: Der verbraucherseitige Dichtring, der in der Schließstellung vorher die auf das Küken wirkende hydraulische Kraft aufnahm und damit die größte Dichtwirkung hatte, wird in dieser Stellung weitgehend oder ganz wirkungslos. Die auf das Küken wirkende hydraulische Kraft wird vor diesem Dichtring in die Lager eingeleitet. Die hauptsächlich oder allein wirkende Dichtfläche ist diejenige am druckseitigen Dichtring.

Der Vorteil der Lagerung des Kükens auf Welle und Achse wird jedoch zu einem wesentlichen Teil wieder aufgezehrt, wenn sich auf der Verbraucherseite Gegendruck einstellt. Dann wird der verbraucherseitige Dichtring ebenso angepreßt wie der druckseitige und die zum Öffnen notwendige Kraft verdoppelt.

Der Erfindung liegt die Aufgabe zugrunde, die beim Öffnen zu überwindende Reibungshaftung des Kükens an den Dichtringen im Falle von Gegendruck zu vermindern.

Gemäß der Erfindung wird dieser Zweck bei einem Kugelhahn der eingangs bezeichneten Art dadurch erfüllt, daß der außerhalb des Kükens zwischen den beiden Dichtringen liegende Gehäuseraum mit der Druckseite und/oder der Verbraucherseite eine durch ein von außen zu betätigendes Ventil führende Leitungsverbindung hat oder daß zwischen den beiden Dichtringen ein Abstandhalter solcher Länge angeordnet ist, daß er bei an dem Küken anliegendem druckseitigen Dichtring den verbraucherseitigen Dichtring von dem Küken abgehoben hält und umgekehrt.

Nach beiden Alternativen ist ein Öffnen des Kugelhahns mit gelockerten Dichtringen möglich unbeschadet der dichten Anpressung des druckseitigen Dichtringes an das Küken im normalen Schließzustand, d.h. bei Überdruck auf der Druckseite, sowie dichter Anpressung des verbraucherseitigen Dichtrings an das Küken bei einer etwaigen Umkehr des Druckgefälles.

Bei der ersten Alternative wird vor dem Öffnen des Kugelhahnes durch Betätigen des Ventiles Druck in den genannten Gehäuseraum eingelassen. Bei der zweiten Alternative baut sich der etwa entstehende verbraucherseitige Gegendruck von vornherein auch in dem genannten Gehäuseraum auf.
Der Druck in dem Gehäuseraum bzw. die Druckflüssigkeit gelangt an der Dichtfläche zwischen Küken und Dichtring, worauf unten noch näher eingegangen ist, und erzeugt eine Gegenkraft zur Anpreßkraft des Dichtringes. Die Reibungskraft der Kugel gegenüber dem Dichtring und damit das zum Öffnen des Kugelhahnes erforderliche Drehmoment werden vermindert.

Die genannte Leitungsverbindung ist zweckmäßigerweise in dem Ventilgehäuse gebohrt.
Nach einer vorteilhaften Weiterbildung der Erfindung ist das Ventil durch Kippen des genannten Hebels zu betätigen und eine Sperre derart vorgesehen, daß der Hebel die genannte Welle erst nach Betätigen des Ventils verdrehen kann. Damit wird die Lockerung der Dichtringe vor dem Öffnen des Ventils erzwungen.

In einer vorteilhaften konkreteren Ausgestaltung besteht die Sperre aus einer drehfest auf der Welle angeordneten Scheibe, deren Verdrehung aus der Schließstellung des Kugelhahns blockiert ist durch einen, vorzugsweise in eine Bohrung der Scheibe greifenden, Betätigungsstößel des Ventils, und an dem Hebel ist ein Dorn zum Drücken des Betätigungsstößels in die Öffnungsstellung des Ventils und zugleich Freigeben der Scheibe angeordnet.

Der genannte Abstandhalter hat nach einer anderen vorteilhaften Weiterbildung der Erfindung die Form einer Hülse, die mit zwei gegenüberliegenden, von einer Stirnseite her eingeschnittenen Ausnehmungen auf die Welle und Achse geschoben ist. Die Hülse bietet jedem Dichtring ein stabiles Auflager und beiden zusammen eine stabile Abstützung gegeneinander.

Das gilt in besonderem Maße in der weiteren Ausgestaltung, daß die Hülse mindestens an dem einen Dichtring einen zentrierenden Sitz auf einem Absatz des Dichtringes hat.

Die Zeichnungen geben Ausführungsbeispiele der Erfindung wieder.
- Fig. 1: zeigt einen ersten Kugelhahn in einem axialen Schnitt,
- Fig. 2: zeigt einen zweiten Kugelhahn in einem axialen Schnitt und
- Fig. 3: zeigt einen in Fig. 2 strichpunktiert eingegrenzten länglichen Ausschnitt in größerem Maßstab.

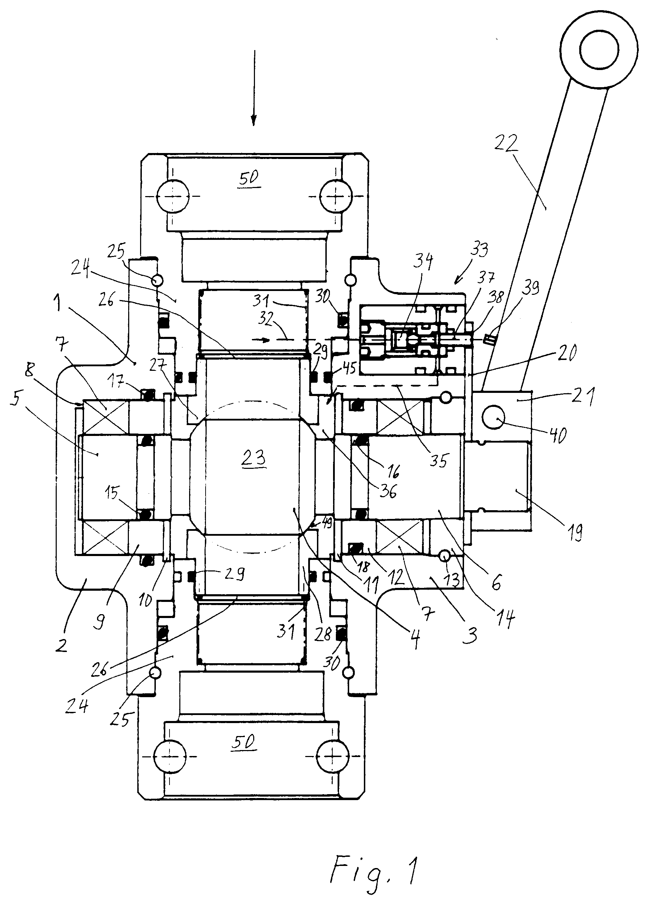

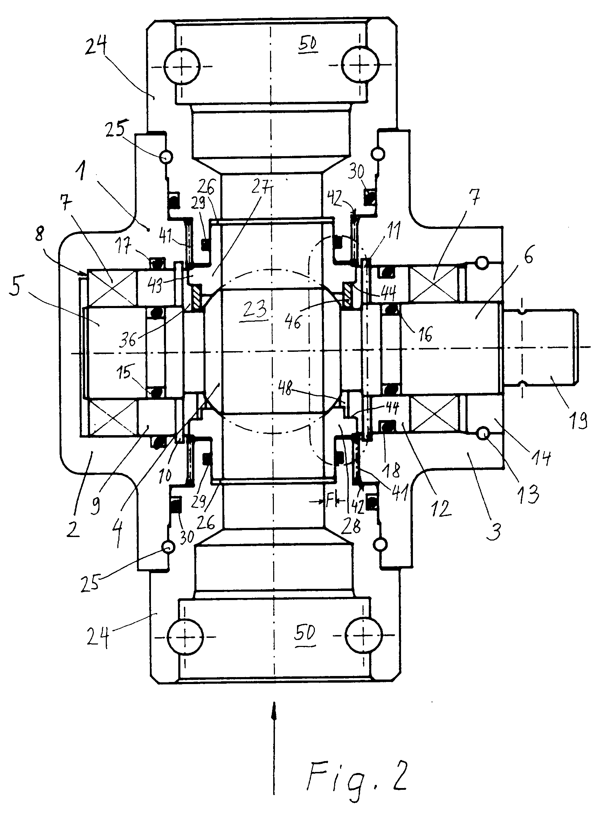

Die beiden Kugelhähne nach Fig. 1 und 2 haben ungeachtet kleiner Verschiedenheiten im einzelnen folgenden gemeinsamen Aufbau:
An einem Grundgehäuse 1 sind in Flucht miteinander zwei Stutzen 2 und 3 ausgebildet, in denen ein Küken 4 mit einer Achse 5 bzw. einer Welle 6 in Lagern 7 gelagert ist.
In dem Stutzen 2 ist das Lager 7 zwischen einem Absatz 8 und einem Einsatzring 9 durch einen Sprengring 10 gehalten.

Zwei O-Ringe in Nuten 15 bzw. 16 der Achse 5 und der Welle 6 dichten zwischen diesen und den Einsatzringen 9 bzw. 12 ab.
Diese sind ihrerseits durch O-Ringe in einer Nut 17 des Grundgehäuses bzw. einer Nut 18 in dem Einsatzring 12 gegenüber dem Grundgehäuse 1 abgedichtet.
Das aus dem Stutzen 3 herausragende Ende der Welle 6 ist als Vierkant 19 ausgebildet. In Fig. 1 sitzen auf dem Vierkant eine Scheibe 20 und eine mittels eines in der Zeichnung nicht erscheinenden Nutdrahtes befestigte Halterung 21 für einen Hebel 22.

Das Küken 4 hat zwischen den Ansätzen seiner Achse 5 und seiner Welle 6 eine Kugeloberfläche mit Ausnahme der Enden einer, verhältnismäßig weiten, Durchlaß-Bohrung 23.

Von gegenüberliegenden Seiten her auf das Küken 4 zu sind zwei Gehäuseteile 24 in das Grundgehäuse 1 eingesetzt. Sie sind durch Nutdrähte 25 darin gehalten. Jeweils in einer zylindrischen Bohrung 26 nehmen sie einen mit einer etwa entsprechenden Hohlkugelfläche an dem Küken 4 anliegenden Dichtring 27 bzw. 28 auf.

Die Dichtringe 27 und 28 bestehen aus einem verhältnismäßig steifen, reibungsarmen Kunststoff, wie Teflon. Sie sind ihrerseits jeweils durch einen O-Ring, der in einer in der Wand der Bohrung 26 ausgebildeten Nut 29 sitzt, gegenüber dieser Wand abgedichtet. Die Gehäuseteile 24 sind durch in an ihrem Umfang eingeschnittenen Nuten 30 sitzende O-Ringe gegenüber dem Grundgehäuse 1 abgedichtet.
Die Gehäuseteile 24 sind mit Steck-O-Anschlüssen 50 versehen.

In dem Kugelhahn nach Fig. 1 sitzt zwischen der dem Küken 4 abgewandten Stirnseite der Dichtringe 27 und 28 und einem dieser gegenüber in dem Gehäuseteil 24 geformten Absatz jeweils eine Feder 31 als elastisches Druckglied.
Auf der vorgesehenen Druckseite führt hier eine Bohrung 32 durch die Wandung des Gehäuseteils 24 und des Grundgehäuses 1 in ein an dem Grundgehäuse angeformtes Nebengehäuse 33 und in ein in diesem sitzendes Ventil 34. Dabei dichtet ein O-Ring in einer weiteren Nut 45 des Gehäuseteils 24 zusammen mit dem O-Ring in der Nut 30 den Durchtritt von dem Gehäuseteil 24 zu der Wandung des Grundgehäuses 1 ab. Aus dem Ventil führt eine weitere Bohrung 35 in der Wandung des Grundgehäuses 1 in den Gehäuseraum außerhalb des Kükens 4 und der Dichtringe 27 und 28, d.h. auch zwischen den Dichtringen 27 und 28.

Das Ventil 34 ist zu öffnen durch Eindrücken eines Betätigungsstößels 37, der im geschlossenen Zustand des Ventils in eine Bohrung 38 der weiter oben erwähnten Scheibe 20 ragt. Zum Eindrücken des Betätigungsstößels 37 ist an dem Hebel 22 ein Dorn 39 angeordnet, der bei Kippen des Hebels um eine Achse 40, mit der der Hebel 22 in seiner Halterung 21 befestigt ist, von außen in die Bohrung 38 stößt.

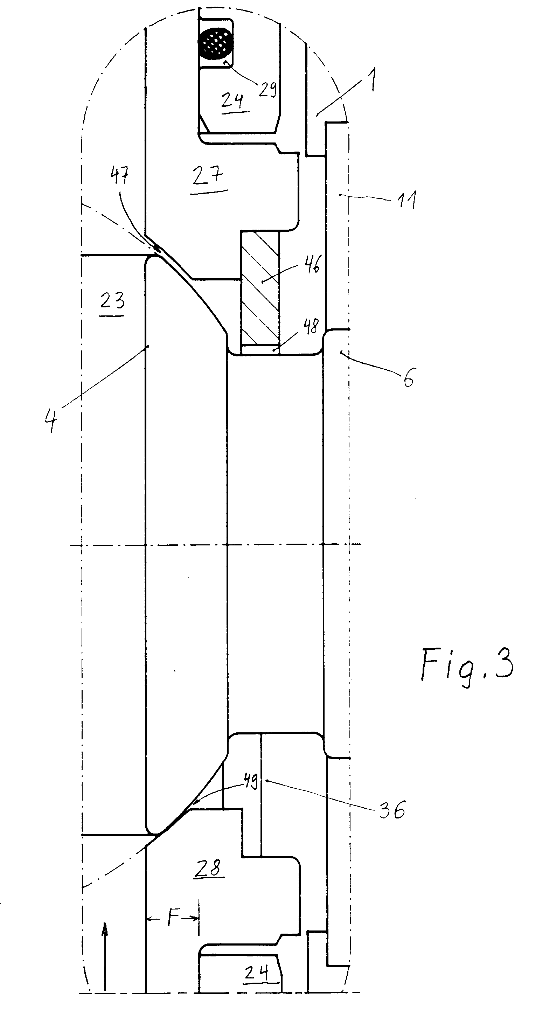

In dem Kugelhahn nach Fig. 2 sind statt der Federn 31 Federn 41 zwischen einem Absatz 42 der Gehäuseteile 24 und einem Bund 43 der Dichtringe 27 und 28 angeordnet.
Auf der anderen Seite ist an den Dichtringen 27 ein Absatz geformt als zentrierender Sitz 44 für eine Hülse 46, die auf diese Weise die beiden Dichtringe 27 und 28 zu einer sich zusammen mit der Hülse 46 gemeinsam bewegenden, durch die Federn 41 zusammengeschaltenen und in einer mittleren Ausgangsstellung gehaltenen, Einheit verbindet. Der, nur geringe, Bewegungsspielraum ist in Fig. 3 als Abstand 47 zu erkennen.

Die Hülse 26 nimmt das Küken 4 in ihrem Innenraum auf und die Achse 5 und die Welle 6 in Einschnitten 48 ihrer Wandung. Die Einschnitte 48 haben die gerade nur für diesen Zweck benötigte Größe. Sie sind in Fig. 2 und 3 zu erkennen im Vergleich der oben vollen, in der Zeichenebene geschnittenen Hülsenwand mit dem unten in Ansicht und etwas nach innen versetzt erscheinenden Rand der Einschnitte 48.

In Fig. 2 und 3 ist umgekehrt zu Fig. 1 die Druckseite und die Verbraucherseite oben.
Fig. 3 zeigt den Ausgangszustand, d.h. das geöffnete und von der Druckflüssigkeit in Pfeilrichtung durchströmte Ventil. Der Dichtring 28 liegt noch ohne Pressung an dem Küken 4 an. Man erkennt, daß die an dem Dichtring 28 ausgebildete Dichtfläche nicht ganz genau das Gegenstück zu der Kugeloberfläche des Kükens ist, sondern einen etwas größeren Krümmungsradius hat, so daß sich ein, allerdings minimaler, Spalt 49 nach außen öffnet.
Wird der Kugelhahn geschlossen, liegt weiterhin in Pfeilrichtung der Pumpendruck an, während in Gegenrichtung kein oder ein geringerer Druck besteht. Die mit F gekennzeichnete Ringfläche des Dichtringes 28 wird dann als Kolbenfläche wirksam. Die Kolbenkraft drückt den Dichtring 28 mit seiner Dichtfläche,
die etwas kleiner ist als die Kolbenfläche F, an das Küken 4 an. Durch Verformung des in bekannter Weise aus einem geeigneten Kunststoff, wie Teflon, bestehenden Dichtringes 28 schließt sich der Spalt 49 dann von innen nach außen, wobei die vorher darin vorhandene Restflüssigkeit ausgedrückt wird.

Baut sich von der Verbraucherseite her Druck auf, so liegt dieser aufgrund des Abstandes 47 zwischen dem verbraucherseitigen Dichtring 27 und dem Küken 4 auch in dem genannten Gehäuseraum 36 an. Da die Dichtfläche des Dichtringes 28, wie gesagt, etwas kleiner ist als die Kolbenfläche F, baut sich durch den Gegendruck eine Gegenkraft an dem Dichtring 28 auf.
Sie öffnet den Spalt 49 ein klein wenig, wird dadurch entsprechend größer, öffnet dadurch den Spalt 49 noch ein wenig weiter usw.. Benetzungskräfte können hinzukommen. Der Dichtring 28 wird gelockert und läßt sich dann leichter öffnen.
Wird der Gegendruck so hoch wie der Pumpendruck, schwimmt der Dichtring 28.
Lockerung und Schwimmen schaden nicht, weil bei den betreffenden Zuständen auch die Druckdifferenz geringer wird bzw. wegfällt und dann auch nur eine entsprechend geringere bzw. keine Schließkraft mehr notwendig ist.
Sollte durch Wegfall des Pumpendrucks sich die Druckdifferenz umkehren, entstünde in dem genannten Gehäuseraum 26 ein geringerer Druck als auf der Kolbenfläche des verbraucherseitigen Dichtringes 27. Die aus den Dichtringen 27 und 28 und der Hülse 46 bestehende Anordnung würde sich verschieben bis zur Anlage und Anpressung des Dichtringes 27 an das Küken 4, wobei dann der Dichtring 28 von dem Küken abgehoben ist. Die Schließfunktion des Kugelhahnes ist also auch in diesem Falle sichergestellt.

Die Lockerung des Dichtringes 28 durch Gegendruck tritt bei dem Kugelhahn nach Fig. 2 und 3 wie beschrieben ein, ist aber hier nicht unbedingt beabsichtigt. Entscheidend ist, daß durch die Hülse 46 als Abstandhalter im Falle von Gegendruck nicht der Dichtring 27 zusätzlich an das Küken 4 angepreßt wird.

Das geschieht bei dem Kugelhahn nach Fig. 1, und da kommt es allein auf die, hier ebenso stattfindende, Lockerung an:
Die Anpressung des druckseitigen Dichtringes 27 des Kugelhahns nach Fig. 1 vollzieht sich wie für den Kugelhahn nach Fig. 2 und 3 und dessen druckseitigen Dichtring 28 beschrieben und zusätzlich mit anfänglicher Unterstützung durch die Feder 31.
Kommt Gegendruck vom Verbraucher, so preßt dieser den, gleichfalls durch seine Feder 31 in Anlage an dem Küken 4 gehaltenen, Dichtring 28 ebenfalls an das Küken an, ohne daß sich der entstehende Gegendruck in den genannten Gehäuseraum 36 hinein fortpflanzen konnte. So kommt es bis zur Verdoppelung der von den Dichtringen 27 und 28 auf das Küken 4 ausgeübten Reibungskraft, die beim Öffnung überwunden werden müßte.

Hier erhält man den vollen Vorteil der Lockerung, dadurch, daß durch Öffnung des Ventils 34 mittels des Hebels 22 der genannte Gehäuseraum 36 von der Druckseite her unter den Pumpendruck gesetzt wird. Beide Dichtringe werden mehr oder weniger von dem Küken getrennt.
Die Anordnung 32 bis 35 könnte auch auf der Verbraucherseite des Kugelhahnes getroffen sein. Denn sie wirkt sich im wesentlichen ohnehin nur aus, soweit Druck von beiden Seiten vorhanden ist; sonst läßt sich in dem genannten Gehäuseraum 36 kein Druck erzeugen. Die nach Fig. 1 vorgesehene zwangsweise Öffnung des Ventils 34 vor dem Öffnen schadet jedoch nicht, wenn kein Gegendruck vorhanden ist.
Dies wird in der Regel der Normalfall sein, in dem, auch bei dem Ventil nach Fig. 2, das Öffnen die Überwindung der Reibungskraft des mit voller Kraft an das Küken angedrückten druckseitigen Dichtrings 27 bzw. 28, aber eben nur dieses einen Dichtringes, verlangt.

## Patentansprüche

1. Kugelhahn für Flüssigkeiten, insbesondere für die Hydraulik, mit in einem Gehäuse (1,24) zwischen zwei Dichtringen (27;28) angeordnetem Küken (4), das mittels einer an seiner einen Seite angeordneten, mit einem Hebel (22) versehenen, zu der Achse der Dichtringe (27;28) senkrechten Welle (6) verdrehbar ist und auf dieser sowie einer auf der anderen Seite des Kükens (4) angeordneten, mit ihr fluchtenden Achse (5) unter Abdichtung (15,16) gegenüber dem Gehäuse (1) gelagert ist, wobei die Dichtringe (27;28) derart angeordnet sind, daß sie durch den Flüssigkeitsdruck an das Küken (4) angepreßt werden, insbesondere als Kolben in einem zylindrischen Gehäuseteil (24), vorzugsweise diesem gegenüber durch einen schmaleren, elastischeren Dichtring (29) abgedichtet, angeordnet sind,
dadurch gekennzeichnet,
daß der außerhalb des Kükens (4) zwischen den beiden Dichtringen (27;28) liegende Gehäuseraum (36) mit der Druckseite und/oder der Verbraucherseite eine durch ein von außen zu betätigendes Ventil (34) führende Leitungsverbindung (32,35) hat oder daß zwischen den beiden Dichtringen (27;28) ein Abstandhalter (46) solcher Länge angeordnet ist, daß er bei an dem Küken (4) anliegendem druckseitigen Dichtring (27) den verbraucherseitigen Dichtring (28) von dem Küken (4) abgehoben hält und umgekehrt.

2. Kugelhahn nach Anspruch 1,
dadurch gekennzeichnet,
daß die genannte Leitungsverbindung (32,35) im Ventilgehäuse gebohrt ist.

3. Kugelhahn nach Anspruch 1 oder 2,
dadurch gekennzeichnet,
daß das Ventil (34) durch Kippen des genannten Hebels (22) zu betätigen ist, vorzugsweise mit einer Sperre (37,20) derart, daß der Hebel (22) die genannte Welle (6) erst nach Betätigen des Ventils (34) verdrehen kann.

4. Kugelhahn nach Anspruch 3,
dadurch gekennzeichnet,
daß die Sperre (37,20) aus einer drehfest auf der Welle (6) angeordneten Scheibe (20) besteht, deren Verdrehung aus der Schließstellung des Kugelhahns blockiert ist durch einen, vorzugsweise in eine Bohrung (38) der Scheibe (20) greifenden, Betätigungsstößel (37) des Ventils (34), und daß an dem Hebel (22) ein Dorn (39) zum Drücken des Betätigungsstößels (37) in die Öffnungsstellung des Ventils (34) und zugleich Freigeben der Scheibe (20) angeordnet ist.

5. Kugelhahn nach Anspruch 1,
dadurch gekennzeichnet,
daß der Abstandhalter (46) die Form einer Hülse (46) hat, die mit zwei gegenüberliegenden, von einer Stirnseite her eingeschnittenen Ausnehmungen (48) auf die Welle (6) und die Achse (5) geschoben ist.

6. Kugelhahn nach Anspruch 5,
dadurch gekennzeichnet,
daß die Hülse (46) mindestens an dem einen Dichtring (27;28) einen zentrierenden Sitz (44) auf einem Absatz des Dichtringes (27;28) hat.
